(19) Europäisches Patentamt
European Patent Office
Office européen des brevets

(11) EP 1 395 632 B1

(12) **EUROPÄISCHE PATENTSCHRIFT**

(45) Veröffentlichungstag und Bekanntmachung des Hinweises auf die Patenterteilung:
**17.01.2007 Patentblatt 2007/03**

(21) Anmeldenummer: **02730263.7**

(22) Anmeldetag: **17.05.2002**

(51) Int Cl.:
***C08K 3/22*** (2006.01) ***C08L 77/00*** (2006.01)
***C08G 69/46*** (2006.01)

(86) Internationale Anmeldenummer:
**PCT/EP2002/005475**

(87) Internationale Veröffentlichungsnummer:
**WO 2002/094921 (28.11.2002 Gazette 2002/48)**

(54) **AMIDPOLYMERMASSE**

AMIDE POLYMER MATERIAL

MATIERE POLYMERE A BASE D'AMIDE

(84) Benannte Vertragsstaaten:
**AT BE CH CY DE DK ES FI FR GB GR IE IT LI LU MC NL PT SE TR**
Benannte Erstreckungsstaaten:
**RO SI**

(30) Priorität: **22.05.2001 DE 10125137**

(43) Veröffentlichungstag der Anmeldung:
**10.03.2004 Patentblatt 2004/11**

(73) Patentinhaber: **BASF Aktiengesellschaft**
**67056 Ludwigshafen (DE)**

(72) Erfinder:
- **WEISS, Robert**
**67281 Kirchheim (DE)**
- **NEUBERG, Rainer**
**67125 Dannstadt-Schauernheim (DE)**
- **WILMS, Axel**
**67256 Weisenheim (DE)**
- **KLOSTERMANN, Rainer**
**68766 Hockenheim (DE)**
- **RICHTER, Konrad**
**67069 Ludwigshafen (DE)**

(56) Entgegenhaltungen:
**WO-A-97/05189** **DE-A- 2 642 461**
**DE-A- 3 619 884**

Bemerkungen:
Die Akte enthält technische Angaben, die nach dem Eingang der Anmeldung eingereicht wurden und die nicht in dieser Patentschrift enthalten sind.

EP 1 395 632 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft eine polymere Masse (I) enthaltend

a) ein Polymeres (II) mit in der Polymerhauptkette wiederkehrenden Amidgruppen und

b) 0,01 bis 5 Gew.-% bezogen auf dieses Polymer ein Titandioxid (III) mit einer mittleren Korngröße $d_{50}$ von bis zu 150 nm,

sowie Fasern, Flächengebilde und Formkörper enthaltend eine solche polymere Masse.

Die Verwendung von Polyamiden zur Herstellung von Fasern und Garnen ist allgemein bekannt, beispielsweise aus: Ullmann's Encyclopedia of Industrial Chemistry, 5. Ed., Vol. A10, VCH Verlagsgesellschaft mbH, Weinheim, Deutschland, 1987, Seite 567-579.

Die Garnherstellung erfolgt in an sich bekannter Weise durch Aufschmelzen des Polyamids, Verspinnen des Polyamids zu einer Faser, Verstrecken und Texturieren dieser Faser und gegebenenfalls Nachbehandlung der Faser.

Im Falle von Teppichfasern kann sich eine Kablierung und Hitzefixierung des Garns anschließen.Verfahren zur Fixierung sind an sich bekannt. Wesentlicher Schritt der Fixierung ist die Führung des Garns durch eine Klimakammer unter definierten Verfahrensbedingungen, wie Verweilzeit des Garns sowie erhöhter Temperatur im Bereich von 170 bis 200°C und relative Feuchtigkeit der Atmosphäre in der Klimakammer.

Im Falle von textilen Fasern werden diese nach der Verarbeitung zu Flächengebilden häufig vor dem Färben im sogenannten Spannrahmen hitzefixiert. Diese Hitzefixierung dient dazu, die Formstabilität der Fläche beim anschließenden Färben und Weiterverarbeiten zu erhöhen und das Kantenkräuseln zu verhindern oder zumindest zu reduzieren. Bei dem Hitzefixieren werden die Flächengebilde einer Temperatur von 170 bis 200°C ausgesetzt.

Nachteilig bei diesen Hitzefixierungen ist, daß sich die Qualität der Polyamide, nachweisbar beispielsweise durch Verringerung der Viskosität oder des Aminoendgruppengehalts ("AEG"), bei dieser Fixierung deutlich verschlechtert. Das Absinken des AEG ist ein Hinweis auf eine Schädigung des Polymers und führt beispielsweise beim Anfärben des Polymers, insbesondere im Falle von Flächengebilden, zu einer Verringerung der Anfärbetiefe und Anfärbegleichmäßigkeit, beispielsweise zu Streifigkeit.

Zur Reduzierung dieser Schädigung können dem Polymer bekanntermaßen Stabilisatoren physikalisch beigemischt werden. Dies hat den Nachteil, daß die Stabilisatoren bei der Hitzefixierung, bei der Färbung oder der späteren Benutzung der aus den Polymeren hergestellten Produkte aus dem Polymer wieder ausgewaschen werden oder ausdampfen können.

Zur Lösung dieses Problems wurde beispielsweise in WO 95/28443, DE-A-195 37 614, WO 97/05189 und US-A-5,851,238 vorgeschlagen, einen Stabilisator, insbesondere ein sterisch gehindertes Piperidin-Derivat, an die Polymerhauptkette chemisch zu binden.

Trotz dieser Offenbarung besteht Bedarf an einer weiteren Verbesserung der Stabilisierung von Polyamiden.

Der vorliegenden Erfindung lag die Aufgabe zugrunde, eine polymere Masse bereitzustellen, aus der sich Fasern, Flächengebilde und Formkörper mit verbesserter Hitzestabilisierung, gemessen durch eine verringerte Abnahme der Viskosität, des Aminoendgruppengehalts ("AEG"), der Anfärbetiefe und der Anfärbegleichmäßigkeit, herstellen lassen.

Demgemäß wurden die eingangs definierten polymeren Massen und solche polymere Massen enthaltene Fasern, Flächengebilde und Formkörper gefunden.

Erfindungsgemäß enthält die polymere Masse (I) ein Polymeres (II) mit in der polymerhauptkette wiederkehrenden Amidgruppen.

Im Sinne der vorliegenden Erfindung werden unter einem Polymer (II) ein Polymer mit in der Polymerhauptkette wiederkehrenden Amidgruppen, oder ein Gemisch verschiedener Polymere mit in der Polymerhauptkette wiederkehrenden Amidgruppen verstanden.

Neben Polymer (II) kann polymere Masse (I) weitere Polymere enthalten, die nicht Polymer (II) sind. In einer vorteilhaften Ausführungsform enthält polymere Masse (I) als Polymer nur Polymer (II).

In einer besonders bevorzugten Ausführungsform enthält polymere Masse (I) als Polymer (II) nur ein Polymer mit in der Polymer-hauptkette wiederkehrenden Amidgruppen.

In einer anderen besonders bevorzugten Ausführungsform enthält polymere Masse (I) als Polymer (II) ein Gemisch mehrerer, wie 2, 3, 4 oder 5, Polymere mit in der Polymerhauptkette wiederkehrenden Amidgruppen. Solchen Polymere (II) können auch mehr als 5 Polymere mit in der Polymerhauptkette wiederkehrenden Amidgruppen enthalten. Es hat sich bisher aber als wirtschaftlich zweckmäßiger erwiesen, die Zahl der Polymere mit in der Polymerhauptkette wiederkehrenden Amidgruppen in Polymer (II) nicht zu hoch zu wählen, insbesondere haben sich 2 oder 3 als besonders vorteilhaft erwiesen.

Polymer (II) kann neben in der Polymerhauptkette wiederkehrenden Amidgruppen auch andere funktionelle

Gruppen enthalten, insbesondere solche und in einem solchen Umfang, daß der Effekt der vorliegenden Erfindung nicht negativ beeinflußt wird. Dabei kommen vorteilhaft Ether-, Amino-, Keto-, Sulfid-, Sulfon-, Imid-, Ester-, Carbonat- oder Urethan-Gruppen, insbesondere Ether und Ester, in Betracht.

In einer vorteilhaften Ausführungsform enthält die Polymerhauptkette von Polymer (II) keine anderen funktionellen Gruppen als die Amidgruppe.

Polymere mit in der Polymerhauptkette wiederkehrenden Amidgruppen werden üblicherweise als Polyamide bezeichnet.

Unter Polyamiden werden Homopolymere, Copolymere, Mischungen und Pfropfungen von synthetischen langkettigen Polyamiden verstanden, die als wesentlichen Bestandteil wiederkehrend Amid-Gruppen in der Polymer-Hauptkette aufweisen. Beispiele solcher Polyamide sind Nylon 6 (Polycaprolactam), Nylon 6,6 (Polyhexamethylenadipamid), Nylon 4,6 (Polytetramethylenadipamid), Nylon 6,10 (Polyhexamethylensebacamid), Nylon 6,12 (Poly-hexamethylen-1,10-decandicarbonsäure-amid), Nylon 7 (Polyenantholactam), Nylon 11 (Polyundecanolactam), Nylon 12 (Polydodecanolactam). Diese Polyamide tragen bekanntermaßen den generischen Namen Nylon. Unter Polyamiden werden auch die sogenannten Aramide verstanden (aromatische Polyamide), wie Poly-metaphenylen-isophthalamid (NOMEX ® Faser, US-A-3,287,324) oder Poly-paraphenylen-terephthalamid (KEVLAR ® Faser, US-A-3,671,542).

Die Herstellung von Polyamiden kann prinzipiell nach zwei Verfahren erfolgen.

Bei der Polymerisation aus Dicarbonsäuren und Diaminen, wie auch bei der Polymerisation aus Aminosäuren oder deren Derivaten, wie Aminocarbonsäurenitrilen, Aminocarbonsäureamiden, Aminocarbonsäureestern oder Aminocarbonsäuresalzen, reagieren die Amino- und Carboxyl-Endgruppen der Ausgangsmonomere oder Ausgangsoligomere miteinander unter Bildung einer Amid-Gruppe und Wasser. Das Wasser kann anschließend von der Polymermasse entfernt werden. Bei der Polymerisation aus Carbonsäureamiden reagieren die Amino- und Amid-Endgruppen der Ausgangsmonomere oder Ausgangsoligomere miteinander unter Bildung einer Amid-Gruppe und Ammoniak. Der Ammoniak kann anschließend von der Polymermasse entfernt werden. Diese Polymerisationsreaktion bezeichnet man üblicherweise als Polykondensation.

Die Polymerisation aus Lactamen als Ausgangsmonomeren oder Ausgangsoligomeren bezeichnet man üblicherweise als Polyaddition.

Zur Herstellung von Polymeren mit in der Polymerhautkette wiederkehrenden Amid-Gruppen kann man Monomere ausgewählt aus der Gruppe bestehend aus Lactamen, w-Aminocarbonsäuren, w-Aminocarbonsäurenitrilen, w-Aminocarbonsäureamiden, w-Aminocarbonsäuresalze, w-Aminocarbonsäureester, äquimolaren Mischungen aus Diaminen und Dicarbonsäuren, Dicarbonsäure/Diamin-Salzen, Dinitrilen und Diaminen oder Gemischen solcher Monomere einsetzen.

Als Monomere kommen

Monomere oder Oligomere eines $C_2$ - bis $C_{20}$ - vorzugsweise $C_2$ - bis $C_{18}$ - arylaliphatischen oder vorzugsweise aliphatischen Lactams , wie Enantholactam, Undecanolactam, Dodecanolactam oder Caprolactam,

Monomere oder Oligomere von $C_2$ - bis $C_{20}$ -, vorzugsweise $C_3$ - bis $C_{18}$ - Aminocarbonsäuren, wie 6-Aminocapronsäure, 11-Aminoundecansäure, sowie deren Dimere, Trimere, Tetramere, Pentamere oder Hexamere, sowie deren Salze, wie Alkalisalze, beispielsweise Lithium-, Natrium-, Kalium-Salze,

$C_2$ - bis $C_{20}$ -, vorzugsweise $C_3$ - bis $C_{18}$ - Aminocarbonsäurenitrilen, wie 6-Aminocapronitril, 11-Aminoundecansäurenitril, Monomere oder Oligomere von $C_2$ - bis $C_{20}$ - Aminosäuramiden, wie 6-Aminocapronsäureamid, 11-Aminoundecansäureamid sowie deren Dimere, Trimere, Tetramere, Pentamere oder Hexamere,

Ester, vorzugsweise $C_1$-$C_4$-Alkylester, wie Methyl-, Ethyl-, n-Propyl-, i-Propyl-, n-Butyl-, i-Butyl-, s-Butyl-ester, von $C_2$ - bis $C_{20}$ -, vorzugsweise $C_3$ - bis $C_{18}$ - Aminocarbonsäuren, wie 6-Aminocapronsäureester, beispielsweise 6-Aminocapronsäuremethylester, 11-Aminoundecansäureester, beispielsweise 11-Aminoundecansäuremethylester,

Monomere oder Oligomere eines $C_2$ - bis $C_{20}$ -, vorzugsweise $C_2$ - bis $C_{12}$ - Alkyldiamins, wie Tetramethylendiamin oder vorzugsweise Hexamethylendiamin,
mit einer $C_2$ - bis $C_{20}$ -, vorzugsweise $C_2$ - bis $C_{14}$ - aliphatischen Dicarbonsäure oder deren Mono- oder Dinitrile, wie Sebacinsäure, Decandicarbonsäure, Adipinsäure, Sebacinsäuredinitril, Decansäuredinitril oder Adipodinitril,
sowie deren Dimere, Trimere, Tetramere, Pentamere oder Hexamere,
Monomere oder Oligomere eines $C_2$ - bis $C_{20}$ -, vorzugsweise $C_2$ - bis $C_{12}$ - Alkyldiamins, wie Tetramethylendiamin oder vorzugsweise Hexamethylendiamin,
mit einer $C_8$ - bis $C_{20}$ -, vorzugsweise $C_8$ - bis $C_{12}$ - aromatischen Dicarbonsäure oder deren Derivate , beispielsweise Chloride, wie 2,6-Naphthalindicarbonsäure, vorzugsweise Isophthalsäure oder Terephthalsäure,
sowie deren Dimere, Trimere, Tetramere, Pentamere oder Hexamere,
Monomere oder Oligomere eines $C_2$ - bis $C_{20}$ -, vorzugsweise $C_2$ - bis $C_{12}$ - Alkyldiamins, wie Tetramethylendiamin oder vorzugsweise Hexamethylendiamin,
mit einer $C_9$ - bis $C_{20}$ -, vorzugsweise $C_9$ - bis $C_{18}$ - arylaliphatischen Dicarbonsäure oder deren Derivate, beispielsweise

Chloride, wie o-, m- oder p-Phenylendiessigsäure,
sowie deren Dimere, Trimere, Tetramere, Pentamere oder Hexamere,
Monomere oder Oligomere eines $C_6$ - bis $C_{20}$ -, vorzugsweise $C_6$ - bis $C_{10}$ - aromatischen Diamins, wie m- oder p-Phenylendiamin,
mit einer $C_2$ - bis $C_{20}$ -, vorzugsweise $C_2$ - bis $C_{14}$ - aliphatischen Dicarbonsäure oder deren Mono- oder Dinitrile, wie Sebacinsäure, Decandicarbonsäure, Adipinsäure, Sebacinsäuredinitril, Decansäuredinitril oder Adipodinitril,
sowie deren Dimere, Trimere, Tetramere, Pentamere oder Hexamere,
Monomere oder Oligomere eines $C_6$ - bis $C_{20}$ - vorzugsweise $C_6$ - bis $C_{10}$ - aromatischen Diamins, wie m- oder p-Phenylendiamin,
mit einer $C_8$ - bis $C_{20}$ -, vorzugsweise $C_8$ - bis $C_{12}$ - aromatischen Dicarbonsäure oder deren Derivate , beispielsweise Chloride, wie 2,6-Naphthalindicarbonsäure, vorzugsweise Isophthalsäure oder Terephthalsäure,
sowie deren Dimere, Trimere, Tetramere, Pentamere oder Hexamere,
Monomere oder Oligomere eines $C_6$ - bis $C_{20}$ - vorzugsweise $C_6$ - bis $C_{10}$ - aromatischen Diamins, wie m- oder p-Phenylendiamin,
mit einer $C_9$ - bis $C_{20}$ -, vorzugsweise $C_9$ - bis $C_{18}$ - arylaliphatischen Dicarbonsäure oder deren Derivate, beispielsweise Chloride, wie o-, m- oder p-Phenylendiessigsäure,
sowie deren Dimere, Trimere, Tetramere, Pentamere oder Hexamere,
Monomere oder Oligomere eines $C_7$ - bis $C_{20}$ -, vorzugsweise $C_8$ - bis $C_{18}$ - arylaliphatischen Diamins, wie m- oder p-Xylylendiamir,
mit einer $C_2$ - bis $C_{20}$ -, vorzugsweise $C_2$ - bis $C_{14}$ - aliphatischen Dicarbonsäure oder deren Mono- oder Dinitrile, wie Sebacinsäure, Decandicarbonsäure, Adipinsäure, Sebacinsäuredinitril, Decansäuredinitril oder Adipodinitril,
sowie deren Dimere, Trimere, Tetramere, Pentamere oder Hexamere,
Monomere oder Oligomere eines $C_7$ - bis $C_{20}$ -, vorzugsweise $C_8$ - bis $C_{18}$ - arylaliphatischen Diamins, wie m- oder p-Xylylendiamin,
mit einer $C_6$ - bis $C_{20}$ -, vorzugsweise $C_6$ - bis $C_{10}$ - aromatischen Dicarbonsäure oder deren Derivate , beispielsweise Chloride, wie 2,6-Naphthalindicarbonsäure, vorzugsweise Isophthalsäure oder Terephthalsäure,
sowie deren Dimere, Trimere, Tetramere, Pentamere oder Hexamere, Monomere oder Oligomere eines $C_7$ - bis $C_{20}$ -, vorzugsweise $C_8$ - bis $C_{18}$ - arylaliphatischen Diamins, wie m- oder p-Xylylendiamin,
mit einer $C_9$ - bis $C_{20}$ -, vorzugsweise $C_9$ - bis $C_{18}$ - arylaliphatischen Dicarbonsäure oder deren Derivate, beispielsweise Chloride, wie o-, m- oder p-Phenylendiessigsäure,
sowie deren Dimere, Trimere, Tetramere, Pentamere oder Hexamere,
sowie Homopolymere, Copolymere, Mischungen und Pfropfungen solcher Ausgangsmonomere oder Ausgangsoligomere in Betracht.

Bevorzugt sind dabei solche Ausgangsmonomere oder Ausgangsoligomere, die bei der Polymerisation zu den Polyamiden Nylon 6, Nylon 6,6, Nylon 4,6, Nylon 6,10, Nylon 7, Nylon 11, Nylon 12 und den Aramiden Poly-metaphenylen-isophthalamid oder Poly-paraphenylen-terephthalamid, insbesondere zu Nylon 6 (Polycaprolactam) und Nylon 66 (Poly (hexamethylenammoniumadipat)), führen.

In einer vorteilhaften Ausführungsform kann man die Herstellung der zur Bildung von Polymer (II) geeigneten Polymere in Gegenwart eines sterisch gehinderten Piperidin-Derivats, das eine zur Amidbildung hinsichtlich der Polymerhauptkette des Polymeren mit in der Polymerhauptkette wiederkehrenden Amidgruppen fähige Gruppe aufweist, oder Gemischen hiervon durchführen, wobei im Sinne der vorliegenden Erfindung ein einziges Piperidin-Derivat oder Gemische mehrere Piperidin-Derivate als Piperidin-Derivat bezeichnet werden.

Bevorzugt kommen als sterisch gehindertes Piperidin-Derivat solche der Formel

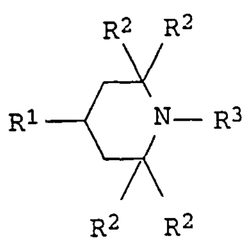

wobei

$R^1$ für eine funktionelle Gruppe steht, die zur Amidbildung gegenüber der Polymerhauptkette des Polymeren mit in

der Polymerhauptkette wiederkehrenden Amid-Gruppen fähig ist, vorzugsweise eine Gruppe -(NH)$R^5$, wobei $R^5$ für Wasserstoff oder $C_1$-$C_8$-Alkyl steht, oder eine Carboxylgruppe oder ein Carboxylderivat oder eine Gruppe -$(CH_2)_x$(NH)$R^5$, wobei X für 1 bis 6 steht und R5 für Wasserstoff oder $C_1$-$C_8$-Alkyl steht, oder eine Gruppe -$(CH_2)_y$COOH, wobei Y für 1 bis 6 steht, oder ein -$(CH_2)_y$COOH Säurederivat, wobei Y für 1 bis 6 steht, insbesondere für eine Gruppe -$NH_2$ steht,

$R^2$ für eine Alkylgruppe steht, vorzugsweise eine C1-C4-Alkylgruppe, wie Methyl, Ethyl, n-Propyl, i-Propyl, n-Butyl, i-Butyl, s-Butyl, s-Butyl, insbesondere eine Methylgruppe,

$R^3$ für Wasserstoff, $C_1$-$C_4$-Alkyl oder O-$R^4$ steht, wobei $R^4$ für Wasserstoff oder $C_1$-$C_7$ Alkyl steht, insbesondere $R^3$ für Wasserstoff steht,

in Betracht.

In solchen Verbindungen reagieren üblicherweise die tertiären, insbesondere sekundären Aminogruppen der Piperidin-Ringsysteme dabei wegen sterischer Hinderung nicht.

Besonders bevorzugt als sterisch gehindertes Piperidin-Derivat ist 4-Amino-2,2,6,6-tetramethylpiperidin ("TAD").

In einer anderen besonders bevorzugten Ausführungsform kann man als sterisch gehindertes Piperidin-Derivat die in WO 99/48949 genannten, insbesondere Bis-(4-amino-2,2,6,6-tetramethyl-piperidino)-hexan, einsetzen.

In einer anderen besonders bevorzugten Ausführungsform kann man als sterisch gehindertes Piperidin-Derivat einen Ester, vorzugsweise einer Carbonsäure mit einer oder mehreren, wie 2, 3 oder 4, insbesondere 2, Carbonsäuregruppen, wie Isophthalsäure, Terephthalsäure, Adipinsäure, von 4-Amino-2,2,6,6-tetramethyl-piperidin einsetzen.

Vorteilhaft kann man ein solches Piperidin-Derivat in Mengen von mindestens 0,005 Mol-%, vorzugsweise mindestens 0,015 Mol-%, insbesondere mindestens 0,025 Mol-%, bezogen auf Säureamid-Gruppen des Polymers, einsetzen.

Vorteilhaft kann man ein solches Piperidin-Derivat in Mengen von höchstens 0,6 Mol-%, vorzugsweise höchstens 0,4 Mol-%, insbesondere höchstens 0,25 Mol-%, bezogen auf Säureamid-Gruppen des Polymers, einsetzen.

Hierdurch ergeben sich Mengen von mindestens 0,017 Gew.-%, vorzugsweise mindestens 0,05 Gew.-%, insbesondere mindestens 0,08 Gew.-%, bezogen auf Gesamtgewicht des Polymers.

Hierdurch ergeben sich Mengen von höchstens 2,1 Gew.-%, vorzugsweise höchstens 1,4 Gew.-%, insbesondere höchstens 0,87 Gew.-%, bezogen auf Gesamtgewicht des Polymers.

Vorteilhaft kann man die Polymerisation der zur Bildung von Polymeren mit in der Polymerhauptkette wiederkehrenden Amidgruppen in Gegenwart einer Verbindung mit mehreren, wie zwei, drei oder vier, vorzugsweise zwei, zur Amidbildung hinsichtlich der Polymerhauptkette des Polymeren fähigen Aminogruppen oder Gemischen hiervon durch.

Als solche Verbindungen kommen vorteilhaft $C_2$ - bis $C_{20}$ -, vorzugsweise $C_2$ - bis $C_{12}$ - Alkyldiamine, wie Tetramethylendiamin oder vorzugsweise Hexamethylendiamin, $C_6$ - bis $C_{20}$ -, vorzugsweise $C_6$ - bis $C_{10}$ - aromatische Diamine, wie m- oder p-Phenylendiamin, oder $C_7$ - bis $C_{20}$ -, vorzugsweise $C_8$ - bis $C_{18}$ - arylaliphatische Diamine, wie m- oder p-Xylylendiamin, in Betracht oder solche Verbindungen, wie sie bei der Herstellung von Polymeren mit in der Polymerhauptkette wiederkehrenden Amidgruppen üblicherweise als Kettenregler eingesetzt werden. Besonders bevorzugt ist Hexamethylendiamin.

Solche Verbindungen können Substituenten tragen, wie Halogene, beispielsweise Fluor, Chlor oder Brom, Sulfonsäuregruppen oder deren Salze, wie Lithium-, Natrium-, Kalium-Salze, oder unsubstituiert sein.

Vorteilhaft kann man solche Verbindungen in Mengen von mindestens 0,01 Gew.-%, vorzugsweise mindestens 0,05 Gew.-%, insbesondere mindestens 0,2 Gew.-%, bezogen auf Gesamtgewicht von Polymer (II) einsetzen.

Vorteilhaft kann man eine solche Verbindung in Mengen von höchstens 0,5 Gew.-%, vorzugsweise höchstens 0,35 Gew.-%, insbesondere höchstens 0,25 Gew.-%, bezogen auf das Gesamtgewicht von Polymer (II) einsetzen.

Vorteilhaft kann man die Polymerisation gegebenenfalls in Gegenwart einer Verbindung mit einer zur Amidbildung hinsichtlich der Polymerhauptkette von fähigen Aminogruppe oder Gemischen durchführen.

Als solche Verbindungen kommen vorteilhaft $C_2$ - bis $C_{20}$ -, vorzugsweise $C_2$ - bis $C_{12}$ - Alkylamine, wie Cyclohexylamin, $C_6$ - bis $C_{20}$ -, vorzugsweise $C_6$ - bis $C_{10}$ - aromatische Monoamine, wie Anilin, oder $C_7$ - bis $C_{20}$ -, vorzugsweise $C_8$ - bis $C_{18}$ - arylaliphatische Monoamine, wie Benzylamin, in Betracht oder solche Verbindungen, wie sie bei der Herstellung von Polymeren mit in der Polymerhauptkette wiederkehrenden Amidgruppen üblicherweise als Kettenregler eingesetzt werden.

Solche Verbindungen können Substituenten tragen, wie Halogene, beispielsweise Fluor, Chlor oder Brom, Sulfonsäuregruppen oder deren Salze, wie Lithium-, Natrium-, Kalium-Salze, oder unsubstituiert sein.

Vorteilhaft kann man solche Verbindungen in Mengen von mindestens 0,01 Gew.-%, vorzugsweise mindestens 0,05 Gew.-%, insbesondere mindestens 0,2 Gew.-%, bezogen auf Gesamtgewicht von Polymer (II) einsetzen.

Vorteilhaft kann man eine solche Verbindung in Mengen von höchstens 0,5 Gew.-%, vorzugsweise höchstens

0,35 Gew.-%, insbesondere höchstens 0,25 Gew.-%, bezogen auf das Gesamtgewicht von Polymer (II) einsetzen.

Vorteilhaft kann man die Polymerisation gegebenenfalls in Gegenwart einer Verbindung mit einer zur Amidbildung hinsichtlich der Polymerhauptkette des Polymeren mit in der Polymerhauptkette wiederkehrenden Amidgruppen fähigen Carbonsäuregruppe oder Gemischen hiervon durchführen.

Als solche Verbindungen kommen vorteilhaft $C_2$ - bis $C_{20}$ -, vorzugsweise $C_2$ - bis $C_{12}$ - Carbonsäuren, wie Essigsäure, Propionsäure, $C_7$ - bis $C_{21}$ -, vorzugsweise $C_7$ - bis $C_{11}$ - aromatische Carbonsäuren, wie Benzoesäure, oder $C_8$ - bis $C_{21}$ -, vorzugsweise $C_9$ - bis $C_{19}$ - arylaliphatische Carbonsäuren in Betracht, oder solche Verbindungen, wie sie bei der Herstellung von Polymeren mit in der Polymerhauptkette wiederkehrenden Amidgruppen üblicherweise als Kettenregler üblicherweise eingesetzt werden.

Solche Verbindungen können Substituenten tragen, wie Halogene, beispielsweise Fluor, Chlor oder Brom, Sulfonsäuregruppen oder deren Salze, wie Lithium-, Natrium-, Kalium-Salze, oder unsubstituiert sein.

Vorteilhaft kann man solche Verbindungen in Mengen von mindestens 0,01 Gew.-%, vorzugsweise mindestens 0,05 Gew.-%, insbesondere mindestens 0,2 Gew.-%, bezogen auf Gesamtgewicht von Polymer (II) einsetzen.

Vorteilhaft kann man eine solche Verbindung in Mengen von höchstens 2 Gew.-%, vorzugsweise höchstens 0,1 Gew.-%, insbesondere höchstens 0,7 Gew.-%, bezogen auf das Gesamtgewicht von Polymer (II) einsetzen.

Vorteilhaft kann man die Polymerisation gegebenenfalls in Gegenwart einer von den Monomeren abweichenden Verbindung mit mehreren, wie zwei, drei oder vier, vorzugsweise zwei, zur Amidbildung hinsichtlich der Polymerhauptkette des Polymeren mit in der Polymerhauptkette wiederkehrenden Amidgruppen fähigen Carbonsäuregruppen oder Gemischen hiervon durch.

Als solche Verbindungen kommen vorteilhaft $C_2$ - bis $C_{20}$ -, vorzugsweise $C_2$ - bis $C_{12}$ - Dicarbonsäuren, wie Sebacinsäure, Dodecansäure, Cyclohexan-1,4-dicarbonsäure, oder vorzugsweise Adipinsäure, $C_8$ - bis $C_{22}$ -, vorzugsweise $C_8$ - bis $C_{12}$ - aromatische Dicarbonsäuren, wie Benzol- und Naphthalindicarbonsäuren, vorzugsweise 2,6-Naphthalindicarbonsäure, Isophthalsäure oder Terephthalsäure, oder $C_9$ - bis $C_{22}$ -, vorzugsweise $C_9$ - bis $C_{20}$ - arylaliphatische Dicarbonsäuren in Betracht oder solche Verbindungen, wie sie bei der Herstellung von Polymeren mit in der Polymerhauptkette wiederkehrenden Amidgruppen üblicherweise als Kettenregler eingesetzt werden. Besonders bevorzugt sind Terephthalsäure und Isophthalsäure.

Solche Verbindungen können Substituenten tragen, wie Halogene, beispielsweise Fluor, Chlor oder Brom, Sulfonsäuregruppen oder deren Salze, wie Lithium-, Natrium-, Kalium-Salze, oder unsubstituiert sein.

Bevorzugt sind sulfonierte Dicarbonsäuren, insbesondere Sulfoisophthalsäure, sowie eines ihrer Salze, wie Alkalisalze, beispielsweise Lithium-, Natrium-, Kalium-Salze, vorzugsweise Lithium- oder Natrium-Salz, insbesondere Lithium-Salz.

Vorteilhaft kann man solche Verbindungen in Mengen von mindestens 0,01 Gew.-%, vorzugsweise mindestens 0,05 Gew.-%, insbesondere mindestens 0,2 Gew.-%, bezogen auf Gesamtgewicht von Polymer (II) einsetzen. vorteilhaft kann man eine solche Verbindung in Mengen von höchstens 2 Gew.-%, vorzugsweise höchstens 0,1 Gew.-%, insbesondere höchstens 0,7 Gew.-%, bezogen auf das Gesamtgewicht von Polymer (II) einsetzen.

Erfindungsgemäß enthält Polymere Masse (I) von 0,01 bis 5 Gew.-%, bezogen auf Polymer (II) ein Titandioxid (III) mit einer mittleren Korngröße $d_{50}$ von bis zu 150 nm. Vorteilhaft kommt für Titandioxid (III) eine mittlere Korngröße $d_{50}$ von bis zu 120 nm, insbesondere bis zu 100 nm, besonders bevorzugt bis zu 90 nm in Betracht. Vorteilhaft kommt für Titandioxid (III) eine mittlere Korngröße $d_{50}$ von mindestens 10 nm, vorzugsweise mindestens 20 nm, insbesondere mindestens 30 nm in Betracht. Unter der mittleren Korngröße wird der mittlere Partikeldurchmesse, gemessen in Suspension, nach der Ultrazentrifugenmethode (Massenverteilung) im Sinne der vorliegenden Erfindung verstanden. $d_{50}$ bedeutet dabei, daß 50 % der Partikel (bezogen auf Masse) kleiner als die angegebene Größe sind. Die Meßmethode ist an sich bekannt und beispielsweise in DE-A-100 04 461 beschrieben.

Die Herstellung solcher feinteiliger Titandioxid-Pigmente ist an sich bekannt, beispielsweise aus DE-A-100 04 461 oder WO 00/14165.

Titandioxid (III) kann vorteilhaft in Mengen von mindestens 0,1 Gew.-%, insbesondere mindestens 0,2 Gew.-%, bezogen auf Polymer (II), eingesetzt werden.

Titandioxid (III) kann vorteilhaft in Mengen von höchstens 3 Gew.-%, insbesondere höchstens 1,8 Gew.-%, bezogen auf Polymer (II), eingesetzt werden.

In einer bevorzugten Ausführungsform kann neben dem feinteiligen Titandioxid (III) Polymer (II) weitere Pigmente enthalten. Bevorzugte Pigmente sind Titandioxid, wobei Titandioxid in der Anatas-Modifikation oder Rutil-Modifikation, vorzugsweise in der Anatas-Modifikation vorliegt, wie es in an sich bekannter Weise in Polyamiden als Mattierungsmittel eingesetzt wird, oder farbgebende Verbindungen anorganischer oder organischer Natur. Solche als Mattierungsmittel eingesetzte Titandioxid-Pigmente weisen üblicherweise eine größere mittlere Partikelgröße $d_{50}$ auf als Titandioxid (III). Sie sollten vorteilhaft eine mittlere Partikelgröße $d_{50}$ von über 200 nm, vorzugsweise größer 250 nm aufweisen. Vorteilhaft sollten solche als Mattierungsmittel eingesetzte Titandioxid-Pigmente eine mittlere Partikelgröße $d_{50}$ von bis zu 10 $\mu$m aufweisen. Die Pigmente können vorzugsweise in einer Menge von bis zu 5 Gewichtsteile, insbesondere bis zu 2 Gewichtsteile, jeweils bezogen aut 100 Gewichtsteile Polymer (II), in Polymer (II) enthalten sein.

Die Pigmente können vorzugsweise in einer Menge von mindestens 0,01 Gewichtsteile, insbesondere mindestens 0,02 Gewichtsteile, jeweils bezogen auf 100 Gewichtsteile Polymer (II), in Polymer (II) enthalten sein.

Die Pigmente können vorteilhaft bei der Herstellung des Polymers zugegeben werden.

Die Herstellung von Polymere (II) kann vorzugsweise nach den üblichen Verfahren durchgeführt werden.

So kann die Polymerisation von Caprolactam als Monomer zur Herstellung von Nylon 6 beispielsweise nach den in DE-A 14 95 198, DE-A 25 58 480, DE-A 44 13 177, Polymerization Processes, Interscience, New York, 1977, S. 424-467 und Handbuch der Technischen Polymerchemie, VCH Verlagsgesellschaft, Weinheim, 1993, S. 546-554 beschriebenen kontinuierlichen oder diskontinuierlichen Verfahren erfolgen.

Bei der Herstellung von Polycaprolactam hat sich die Zugabe von Titandioxid (III) als Suspension oder als Pigmentkonzentrat in Polycaprolactam, vorzugsweise bei Pigment-Gehalten im Bereich von 1 bis 90 Gew.-%, besonders bevorzugt 10 bis 50 Gew.-%, insbesondere 20 bis 35 Gew.-%, bezogen auf das Gesamtgewicht des Pigment-Konzentrats, zum Monomer, also zum Caprolactam, oder während der Polymerisation zum Oligomer, in einer Stufe oder mehreren Stufen als vorteilhaft erwiesen.

Die Polymerisation von AH-Salz als Monomer zur Herstellung von Nylon 66 kann nach dem üblichen diskontinuierlichen Verfahren (siehe: Polymerization Processes, Interscience, New York, 1977, S. 424-467, insbesondere 444-446) oder nach einem kontinuierlichen Verfahren, z.B. gemäß EP-A 129 196, erfolgen.

Bei der Herstellung von Poly(hexamethylendiammoniumadipat) hat sich die Zugabe von Titandioxid (III) als Suspension vorteilhaft in Wasser, vorzugsweise bei Pigment-Gehalten im Bereich von 1 bis 90 Gew.-%, besonders bevorzugt 10 bis 50 Gew.-%, insbesondere 20 bis 35 Gew.-%, bezogen auf das Gesamtgewicht des Pigment-Konzentrats, bevorzugt während der Vorkondensationsphase in einer Stufe oder mehreren Stufen als vorteilhaft erwiesen. Ebenso ist die Zugabe als Pigmentkonzentrat in zur Herstellung von Polymer (I) geeigneten Monomeren, wie Caprolactam, einem Polymer (I), wie Nylon 6 oder Nylon 66, vorzugsweise bei Pigment-Gehalten im Bereich von 1 bis 90 Gew.-%, besonders bevorzugt 10 bis 50 Gew.-%, insbesondere 20 bis 35 Gew.-%, bezogen auf das Gesamtgewicht des Pigment-Konzentrats, bevorzugt wahrend der vorkondensationsphase in einer Stufe oder mehreren Stufen vorteilhaft möglich.

Die Herstellung der genannten Pigmentkonzentrate und Suspensionen enthaltend Titandioxid (III) ist an sich bekannt, beispielsweise aus DE-A-100 04 461 oder WO 00/14165.

Die erfindungsgemäßen polymeren Massen (I) können vorteilhaft zur Herstellung von Fäden, Fasern, Folien, Flächengebilden und Formkörpern verwendet werden. Besonders vorteilhaft sind dabei Fäden, die aus Polyamiden, insbesondere Polycaprolactam, durch Schnellspinnen bei Spulgeschwindigkeiten von mindestens 2000 m/min, vorzugsweise von mindestens 4000 m/min, erhalten werden. Die unter Verwendung der erfindungsgemäßen Polyamide erhaltenen Fäden, Fasern, Folien, Flächengebilde und Formkörper können vielseitig verwendet werden, beispielsweise als Textilbekleidung oder Teppichfasern.

## Beispiele

Die Bestimmung des AEG wurde als acidometrische Titration durchgeführt. Die Amino-Endgruppen wurden in einer Lösung in Phenol/Methanol 70:30 (Gewichtsteile) mit Perchlorsäure titriert.

Die relative Viskosität der polymeren Massen wurde in 1%iger Lösung (1 g/100 ml) in konzentrierter Schwefelsäure (96 Gew.-%) bei 25°C bestimmt gemäß DIN 51562-1 bis -4 Stand Januar 1999.

Die Bestimmung der Hitzebeständigkeit der Polymerfäden erfolgte unter Bedingungen, die denen von Thermofixierprozessen in Folgebehandlungsstufen, wie z.B. Hitzefixieren (Heatsetten) von BCF (bulked continuous filament) oder Spannrahmenfixierung textiler Flächengebilde entsprechen. Von den verstreckten Fäden wurden Stränge von jeweils 5 g abgeweift, zusammen mit den Vergleichsmustern auf einer Haltevorrichtung rasch in einen auf 185°C vorgeheizten Umluftofen eingebracht und dort ab Wiedererreichen der in unmittelbarer Probennähe gemessenen Lufttemperatur weitere 120 Sekunden belassen. Anschließend wurde die Probe sofort entnommen und bei 20°C Raumtemperatur an der Luft abgekühlt. Zu vergleichende Fäden wurden gemeinsam behandelt.

Als Maß der eingetretenen Schädigung wurde (im Vergleich zu einer unbehandelten Probe des gleichen Fadens) die Änderung der relativen Viskosität (RV) und der AEG bewertet. Eine geringere - positive, wie auch negative - Änderung der beiden Werte bedeutet eine geringere Schädigung. zur Beurteilung der Anfarbetiefe und Anfarbegleichmaßigkeit wurden von den zu untersuchenden Garnen Strickstrümpfe hergestellt, hitzefixiert und anschließend in Konkurrenz gefärbt.

Die Hitzefixierung der Flächengebilde erfolgte bei 185°C für 120 Sekunden. Das Strickstück wurde dann nach Vorwäsche mit Nekanil LN, Trilon TA und Essigsäure angefärbt in heißem Wasser (98°C) mit einem Gemisch aus 2% Intrazone Red G (190%), 2% Intracid Rhodamine B, 2% Ammonsulfat und 1% Uniperol W bei pH 3,5.

Die Schwarzfärbung erfolgte nach Vorbehandlung mit Kiralon ® MFB, Lufibrol ® MSD und Soda mit 1% Uniperol ® AC und 0,3% Acidol Schwarz MSRL ® Farbstoff bei pH 7.

Die Farbtiefe wurde dann mittels eines Color-flash-Meßgerätes automatisch bestimmt. Dabei wurde die Farb-

tiefenänderung wie folgt ermittelt:

$$\text{Farbtiefenänderung} = \frac{\text{Farbtiefe des Beispiels (nach Hitzefixierung)}}{\text{Farbtiefe des Vergleichsbeispiels (nach Hitzefixierung)}}\ [\%] - \frac{\text{Farbtiefe des Beispiels (vor Hitzefixierung)}}{\text{Farbtiefe des Vergleichsbeispiels (vor Hitzefixierung)}}\ [\%]$$

Je größer die Erhöhung der Farbtiefenänderung in Bezug auf das Vergleichsbeispiel, desto besser die Farbtiefe.

Die Anfärbegleichmäßigkeit wurde visuell beurteilt. Dazu wurden die gefärbten Proben unabhängig voneinander von fünf Personen nach dem System :

1 = nicht streifig bis 6 = sehr streifig bewertet.

Der Mittelwert der Beurteilungen wurde verwendet.

Herstellung der Polymere

a) Diskontinuierliche Herstellung von Nylon 6

Die Ausgangsverbindungen (Caprolactam, Wasser, Kettenregler, Piperidin-Derivat, Hombitec S 120 (Firma Sachtleben Chemie GmbH), Pigmentkonzentrat PC1 (Firma BASF Aktiengesellschaft) wurden in einem 360 l-Kessel innerhalb von 2 Stunden auf 260°C aufgeheizt. Nach dem Entspannen (innerhalb von 90 min) wurde 45 Minuten nachkondensiert und anschließend unter leichtem Stickstoffüberdruck ausgefahren. Das erhaltene Polyamid wurde anschließend granuliert, mit heißem Wasser extrahiert und im Taumeltrockner unter Stickstoffstrom getrocknet.

b) Diskontinuierliche Herstellung von Nylon 66

60 Gew.-%ige Lösung von AH-Salz, Kettenregler, Piperidin-Derivat,wurden bei 160°C und Atmosphärendruck innerhalb von 15 Minuten vorkondensiert. Anschließend wurde das Titandioxid (III) in Form einer 28 Gew.-%igen wäßrigen Suspension (Hombitec S 120 A, Firma Sachtleben Chemie GmbH) und/oder ein übliches Mattierungs-Titandioxid in Form einer 30 Gew.-%igen wäßrigen Suspension zugegeben. Danach wurde bei einem Druck von 18 bar und einer Temperatur von 275°C über 90 Minuten fertig kondensiert, der Reaktor entspannt, das Polymer unter Stickstoff ausgefahren und granuliert.

c) Verspinnen

Die Verspinnung der Polymere erfolgte auf einer Spinnanlage bei 265°C (Nylon 6) bzw. 295°C (Nylon 66) und 5040 m/min Spulgeschwindigkeit im H4S-Verfahren im Titer 44f12 dtex (rund). Der Durchsatz betrug 22 g/min pro Düse. Die Abzugsgeschwindigkeit betrug 4300 m/min (Duo 1), das Streckverhältnis 1 : 1,28 (Duo 2 = 5500 m/min) und die Fadenspannung vor dem Wickler betrug zwischen 3 und 6 cN. Die Dampfkammer wurde mit 3 bar Dampf betrieben.

Die Eigenschaften der Polyamide sind in den nachfolgenden Tabellen 1 und 2 zusammengefaßt. Die Angaben in Gew.-% beziehen sich jeweils auf das Polymergesamtgewicht.

Die erfindungsgemäßen Polyamide zeigen gegenüber den Vergleichs-Polyamiden geringere Abnahme der relativen Viskosität und der AEG, höhere Anfärbegleichmäßigkeit und tiefere Farbtiefe insbesondere nach der Hitzefixierung.

Tabelle 1

| Nylon 66 | | | | | | | | |
|---|---|---|---|---|---|---|---|---|
| Beispiel | Propionsäure Gew.-% | TAD Gew.-% | $TiO_2$ (III) Gew.-% | Standard $TiO_2$ Gew.-% | Änderung AEG % | Anfärbegleichmäßigkeit | Änderung RV % | Farbtiefenänderung (rot) % |
| 1a | 0,1 | 0 | 0,15 | 0,15 | -35 | 4 | - 2 | 14 |
| 1b | 0,1 | 0 | 0,3 | 0 | -25 | 3 | + 1 | 8 |
| 1c | 0,1 | 0,3 | 0,15 | 0,15 | -22 | 2 | -1 | 18 |
| 1d | 0,1 | 0,3 | 0,3 | 0 | -20 | 1 | 0 | 9 |
| Vgl. 1 | 0,1 | 0 | 0 | 0,3 | -42 | 5 | -14 | ./. |
| | | | | | | | | |
| | | | | | | | | |
| 2a | 0,1 | 0 | 0,6 | 0 | -24 | 2 | + 4 | 6 |
| 2b | 0,1 | 0 | 0,23 | 0,37 | - 22 | 1 | - 3 | 10 |
| Vgl. 2 | 0,1 | 0 | 0 | 0,6 | - 45 | 5 | - 17 | ./. |
| | | | | | | | | |
| | | | | | | | | |
| 3a | 0,1 | 0 | 0,08 | 1,52 | -40 | 4 | - 14 | 2 |
| 3b | 0,1 | 0,15 | 0,8 | 0,8 | -23 | 1 | - 1 | 30 |
| Vgl. 3 | 0,1 | 0 | 0 | 1,6 | - 41 | 5 | - 19 | ./. |

Tabelle 2

| Nylon 6 | | | | | | | | |
|---|---|---|---|---|---|---|---|---|
| Beispiel | Terephthalsäure Gew.-% | TAD-Gew.-% 1 | $TiO_2$ (III) Gew.-% | Standard TiO2 Gew.-% | Änderung AEG % | Anfärbegleichmäßigkeit | Änderung RV % | Farbtiefenänderung (schwarz) % |
| 1a | 0,6 | 0 | 0,15 | 0,15 | - 20 | 2 | -9 | 10 |
| 1b | 0,6 | 0 | 0,3 | 0 | - 19 | 3 | -8 | 20 |
| 1c | 0,6 | 0,3 | 0,15 | 0,15 | - 10 | 1 | 0 | 30 |
| 1d | 0,6 | 0,3 | 0,3 | 0 | - 15 | 3 | -7 | 20 |
| Vgl. 1 | 0,6 | 0 | 0 | 0,3 | - 25 | 4 | -11 | ./. |
| | | | | | | | | |
| 2a | 0,4 | 0,2 | 1,6 | 0 | -7 | 2 | 0 | 25 |
| 2b | 0,4 | 0,2 | 0,8 | 0,8 | -5 | 1 | +2 | 35 |
| 2c | 0,4 | 0 | 0,8 | 0,8 | -15 | 3 | -8 | 20 |
| Vgl. 2 | 0,4 | 0 | 0 | 1,6 | -20 | 5 | -10 | ./. |
| | Adipinsäure Gew.% | | | | | | | |
| 3 | 0,2 | 0,4 | 0,15 | 0,15 | -8 | 2 | 0 | 15 |
| | Isophthalsäure Gew.% | | | | | | | |
| 4 | 0,3 | 0,4 | 0,6 | 0,6 | -5 | 3 | -10 | 17 |
| | Lithium-sulfoisophthalat Gew.% | | | | | | | |
| 5 | 0,1 | 0,2 | 0,3 | 0,3 | -16 | 3 | -10 | 8 |

**Patentansprüche**

1. Polymere Masse (I) enthaltend

   a) ein Polymeres (II) mit in der Polymerhauptkette wiederkehrenden Amidgruppen und
   b) 0,01 bis 5 Gew.-% bezogen auf dieses Polymer ein Titandioxid (III) mit einer mittleren Korngröße $d_{50}$ von bis zu 150 nm.

2. Masse (I) nach Anspruch 1, wobei Polymer (II) an den Enden der Polymerhauptkette mit einem sterisch gehinderten Piperidin-Derivat (III) chemisch verknüpft ist.

3. Masse (I) nach Anspruch 2, wobei Polymer (II) 0,01 bis 0,6 Mol-% Piperidin-Derivat (III), bezogen auf Säureamid-Gruppen von Polymer (II) an den Enden der Polymerhauptkette trägt.

4. Masse (I) nach den Ansprüchen 1 bis 3, wobei man als Piperidin-Derivat (III) 4-Amino-2,2,6,6-tetramethylpiperidin einsetzt.

5. Masse (I) nach den Ansprüchen 1 bis 4, wobei Polymer (II) eine organische Dicarbonsäure im Bereich von 0,017 bis 2,1 Gew.-%, bezogen auf Polymer (II), als Kettenregler enthält.

6. Masse (I) nach den Ansprüchen 1 bis 5, wobei man als Polymer (II) Polycaprolactam einsetzt.

7. Masse (I) nach den Ansprüchen 1 bis 6, wobei man als Polymer (II) Poly(hexamethylendiammoniumadipat) einsetzt.

8. Masse (I) nach den Ansprüchen 1 bis 7, enthaltend zusätzlich mindestens 0,01 Gew.-%, bezogen auf Polymer (II), ein Titandioxid mit einer mittleren Korngröße $d_{50}$ von mindestens 200 nm.

9. Fasern, Flächengebilde und Formkörper, enthaltend eine Masse (I) gemäß den Ansprüchen 1 bis 8.

**Claims**

1. Polymeric material (I) comprising

   a) a polymer (II) having amide groups recurring in the polymer main chain and
   b) from 0.01 to 5% by weight, based on this polymer, of a titanium dioxide (III) having a median particle size $d_{50}$ of up to 150 nm.

2. Material (I) according to claim 1, wherein said polymer (II) has a sterically hindered piperidine derivative (III) chemically attached to the ends of said polymer main chain.

3. Material (I) according to claim 2, wherein said polymer (II) carries from 0.01 to 0.6 mol% of said piperidine derivative (III), based on acid amide groups of said polymer (II), at said ends of said polymer main chain.

4. Material (I) according to any of claims 1 to 3, wherein said piperidine derivative (III) is 4-amino-2,2,6,6-tetramethylpiperidine.

5. Material (I) according to any of claims 1 to 4, wherein said polymer (II) comprises from 0.017 to 2.1% by weight, based on said polymer (II), of an organic dicarboxylic acid chain regulator.

6. Material (I) according to any of claims 1 to 5, wherein said polymer (II) is polycaprolactam.

7. Material (I) according to any of claims 1 to 6, wherein said polymer (II) is poly(hexamethylene diammonium adipate).

8. Material (I) according to any of claims 1 to 7, further comprising at least 0.01% by weight, based on said polymer (II), of a titanium dioxide having a median particle size $d_{50}$ of at least 200 nm.

9. Fibers, sheet materials and moldings comprising a material (I) according to any of claims 1 to 8.

## Revendications

**1.** Masse polymère (I) contenant

a) un polymère (II) comportant des groupes amide répétitifs dans la chaîne principale du polymère, et
b) 0,01 à 5 % en poids, par rapport à ce polymère, d'un dioxyde de titane (III) ayant une taille moyenne de grain $d_{50}$ de jusqu'à 150 nm.

**2.** Masse (I) suivant la revendication 1, dans laquelle le polymère (II) est, aux extrémités de la chaîne principale du polymère, relié chimiquement à un dérivé de pipéridine (III) stériquement empêché.

**3.** Masse (I) suivant la revendication 2, dans laquelle le polymère (II) porte aux extrémités de la chaîne principale de polymère 0,01 à 0,6 % en mole de dérivé de pipéridine (III), par rapport aux groupes amide d'acide du polymère (II).

**4.** Masse (I) suivant les revendications 1 à 3, dans laquelle, comme dérivé de pipéridine (III), on met en oeuvre de la 4-amino-2,2,6,6-tétraméthylpipéridine.

**5.** Masse (I) suivant les revendications 1 à 4, dans laquelle le polymère (II) contient, comme régulateur de chaîne, un acide dicarboxylique organique dans la gamme de 0,017 à 2,1 % en poids, par rapport au polymère (II).

**6.** Masse (I) suivant les revendications 1 à 5, dans laquelle on met en oeuvre, comme polymère (II), du polycaprolactame.

**7.** Masse (I) suivant les revendications 1 à 6, dans laquelle on met en oeuvre, comme polymère (II), du poly(adipate d'hexaméthylènediammonium).

**8.** Masse (I) suivant les revendications 1 à 7, contenant en supplément au moins 0,01 % en poids, par rapport au polymère (II), d'un dioxyde de titane ayant une taille moyenne de grain $d_{50}$ d'au moins 200 nm.

**9.** Fibres, articles plans et corps façonnés, contenant une masse (I) suivant les revendications 1 à 8.